# EUROPÄISCHE PATENTSCHRIFT

(11) **EP 3 772 391 B1**
(45) Veröffentlichungstag und Bekanntmachung des Hinweises auf die Patenterteilung: **26.06.2024**
(21) Anmeldenummer: 20187113.4
(22) Anmeldetag: 22.07.2020
(51) Int. Cl.: B25B 5/04, B23Q 9/00, B25B 5/14, B27B 9/04

(54) **TRAGBARE EINKLEMMVORRICHTUNG UND ELEKTROWERKZEUG MIT INTEGRIERTER WERKSTÜCKFIXIERUNG**
PORTABLE CLAMPING DEVICE AND ELECTRIC TOOL WITH INTEGRATED WORKPIECE FIXATION
DISPOSITIF DE BLOCAGE PORTABLE ET OUTIL ÉLECTRIQUE DOTÉ D'UNE FIXATION INTÉGRÉE DE PIÈCES

(30) Priorität: 05.08.2019 DE 102019121096
(43) Veröffentlichungstag der Anmeldung: 10.02.2021
(73) Patentinhaber: Mafell AG, 78727 Oberndorf a.N. (DE)
(72) Erfinder: Krauss, Matthias, 78737 Fluorn-Winzeln (DE); Zimmermann, Horst, 72160 Horb-Betra (DE)
(74) Vertreter: Manitz Finsterwald Patent- und Rechtsanwaltspartnerschaft mbB

(56) Entgegenhaltungen:
- EP-A2- 2 105 231
- WO-A1-2019/045614
- DE-A1- 3 521 697
- FR-A1- 2 841 490
- GB-A- 942 083
- US-A1- 2007 289 417
- US-A1- 2012 079 931
- US-A1- 2018 193 997

## Beschreibung

Die Erfindung betrifft eine tragbare Vorrichtung zum Einklemmen von zu bearbeitenden Werkstücken.

In der Praxis ist es für einen Handwerker häufig erforderlich, längliche Werkstücke wie beispielsweise Rohre, Profile, Leisten oder Kabelkanäle auf die jeweils benötigte Länge zu bringen, und zwar auch und vor allem auf Baustellen und dort zum Teil unter schwierigen Bedingungen wie z.B. auf Gerüsten oder Dächern. Die Werkstücke können beispielsweise aus Holz, Kunststoff oder Metall bestehen. In Abhängigkeit von dem jeweiligen Werkstück kommen dabei unterschiedliche Elektrowerkzeuge zum Einsatz, in den meisten Fällen Handkreissägen oder sogenannte Winkelschleifer, aber auch Stichsägen oder Oberfräsen.

Voraussetzung für saubere Trennschnitte ist eine gute Werkstückfixierung. In Werkstätten stehen hierfür z.B. Schraubstöcke an Werkbänken zur Verfügung, um ein auf Länge zu schneidendes Werkstück einzuspannen, so dass es im eingespannten Zustand beispielsweise mit einer Handkreissäge bearbeitet werden kann.

Auf einer Baustelle, beispielsweise auf einem Gerüst, ist es dagegen meist umständlich oder praktisch unmöglich, mit nicht-tragbaren Spannvorrichtungen zu arbeiten. Es sind zwar Maschinen wie z.B. sogenannte Gehrungskappsägen oder Tischkreissägen bekannt, die aber aufgrund ihrer Größer und ihres Gewichts nur beschränkt mobil einsetzbar sind und immer einen gewissen Zeitaufwand zum Einspannen des Werkstücks erfordern, so dass sie für schnelle, kurzfristig benötigte Bearbeitungsvorgänge eher ungeeignet sind.

Dokument GB 942 083 A zeigt eine Vorrichtung nach dem Oberbegriff des Anspruchs 1.

Aufgabe der Erfindung ist es daher, eine einfache und zuverlässige Möglichkeit zur Fixierung von zu bearbeitenden Werkstücken zu schaffen, die einen weitgehend uneingeschränkten mobilen Einsatz ermöglicht.

Die Lösung dieser Aufgabe erfolgt jeweils durch die Merkmale der unabhängigen Ansprüche.

Eine erfindungsgemäße tragbare Vorrichtung zum Einklemmen von zu bearbeitenden Werkstücken umfasst einen unteren Klemmabschnitt und einen oberen Klemmabschnitt, die relativ zueinander zwischen einer Klemmstellung und einer Freigabestellung bewegbar sind, wobei die Relativbewegung der beiden Klemmabschnitte durch eine mechanische Verbindung zwischen den beiden Klemmabschnitten zwangsgeführt ist, und wobei der obere Klemmabschnitt zum Abstützen und geradlinigem Führen eines tragbaren handgeführten Elektrowerkzeugs ausgebildet ist, mit dem ein in der Klemmstellung zwischen den beiden Klemmabschnitten unter Ausnutzung des Eigengewichts des Elektrowerkzeugs eingeklemmtes Werkstück bearbeitet wird.

Diese Vorrichtung ermöglicht es, ein zwischen den beiden Klemmschnitten angeordnetes Werkstück unter Ausnutzung des Eigengewichts des Elektrowerkzeugs einzuklemmen und somit für eine sichere und zuverlässige Bearbeitung zwischen den beiden Klemmabschnitten zu fixieren. Die bei der Relativbewegung der beiden Klemmabschnitte erfolgende Zwangsführung durch deren mechanische Verbindung sorgt dafür, dass die beiden Klemmabschnitte in definierter Weise zwischen Freigabestellung und Klemmstellung verstellt werden können. Um die richtige Ausrichtung der beiden Klemmabschnitte braucht sich der Benutzer folglich nicht zu kümmern.

In der Freigabestellung kann ein zu bearbeitendes Werkstück zwischen den beiden Klemmabschnitten positioniert werden. Wenn das Elektrowerkzeug mit dem oberen Klemmabschnitt gekoppelt ist, kann der Benutzer die Freigabestellung durch Anheben des Elektrowerkzeugs samt oberem Klemmabschnitt herstellen, um einen für das jeweilige Werkstück ausreichend großen Abstand zwischen den Klemmabschnitten zu erreichen. Sobald das Werkstück positioniert ist, kann der Benutzer unter Ausnutzung des Eigengewichts des Elektrowerkzeugs den oberen Klemmabschnitt absenken und auf diese Weise die Einklemmvorrichtung schließen.

Bereits aufgrund des Eigengewichts des oberen Klemmabschnitts und vor allem des Elektrowerkzeugs ist das Werkstück in der Klemmstellung sicher fixiert. Die das Werkstück fixierende Klemmkraft wird weiter erhöht, wenn der das Elektrowerkzeug haltende Benutzer über das Elektrowerkzeug eine zusätzliche Kraft auf den oberen Klemmabschnitt und somit auf das am unteren Klemmabschnitt abgestützte Werkstück ausübt. Es wird hier also der Umstand ausgenutzt, dass der Benutzer beim Führen des Elektrowerkzeugs entlang des oberen Klemmabschnitts, also bei der Ausführung des Bearbeitungsvorgangs, das Elektrowerkzeug ohnehin mit einer auch nach unten wirkenden Kraft beaufschlagt.

Auch dann, wenn das Elektrowerkzeug nicht mit dem oberen Klemmabschnitt gekoppelt ist, sondern für den Bearbeitungsvorgang lediglich auf den oberen Klemmabschnitt aufgesetzt wird, ist das Elektrowerkzeug während des Bearbeitungsvorgangs am oberen Klemmabschnitt abgestützt. Es kann also gerade dann, wenn es darauf ankommt, nämlich während des Bearbeitungsvorgangs, das Eigengewicht des Elektrowerkzeugs ausgenutzt werden, um eine das Werkstück sicher zwischen den beiden Klemmabschnitten fixierende Klemmkraft zu erzeugen.

Mit der erfindungsgemäßen tragbaren Vorrichtung ist der Benutzer nicht mehr auf Schraubstöcke oder sonstige nicht-tragbare oder für einen flexiblen Einsatz zu schwere Einrichtungen zum Einspannen von Werkstücken angewiesen. Die erfindungsgemäße Vorrichtung kann überall mit hingenommen und an jedem beliebigen Ort eingesetzt werden, auch unter schwierigen Bedingungen wie z.B. beim Arbeiten auf Gerüsten oder Dächern.

Die erfindungsgemäße Vorrichtung benötigt kein separates Gestell oder sonstige Hilfsmittel zur Abstützung des unteren Klemmabschnitts. Vielmehr kann die Vorrichtung einfach mit dem unteren Klemmabschnitt auf den Boden gelegt werden. Die Bodennähe sorgt automatisch dafür, dass der Benutzer das Elektrowerkzeug beim Arbeiten von oben beaufschlagt und so automatisch selbst für eine hohe Klemmkraft sorgt. Dies schließt selbstverständlich nicht aus, dass mit der erfindungsgemäßen Vorrichtung auf einem Arbeitstisch oder einer Werkbank oder einer wie auch immer gearteten anderen Unterlage gearbeitet wird. Ein Arbeiten auf dem Boden ist mit der erfindungsgemäßen Vorrichtung also möglich, aber nicht zwingend.

Der untere Klemmabschnitt kann beispielsweise aus einem oder mehreren miteinander verbundenen tafelförmigen Blechelementen, z.B. aus Stahl oder Aluminium, hergestellt sein. Hierdurch kann der unter Klemmabschnitt bei hoher mechanischer Stabilität ein geringes Gewicht aufweisen. Eine wie auch immer geartete Profilierung des Klemmabschnitts ist möglich, aber nicht zwingend. Alternativ kann der untere Klemmabschnitt von einem Extrusionsprofil oder von einem Strangpressprofil gebildet sein. Zur Bildung dieser Profile können von den bei der Extrusion oder beim Strangpressen hergestellten Endlosprofilen Abschnitte abgetrennt werden, die dann jeweils einen unteren Klemmabschnitt bilden und deren Länge (in Längsrichtung des Endlosprofils gesehen) jeweils der gewünschten Abmessung des unteren Klemmabschnitts senkrecht zur Arbeitsrichtung des Elektrowerkzeugs entspricht. Die abgetrennten Abschnitte können dann erforderlichenfalls jeweils einer Nachbearbeitung unterzogen werden.

Grundsätzlich kann alternativ oder zusätzlich auch der obere Klemmabschnitt von einem gegebenenfalls nachbearbeiteten Extrusionsprofil oder Strangpressprofil gebildet sein.

Der untere Klemmabschnitt besitzt vorzugsweise eine ausreichende Höhe, um während eines Bearbeitungsvorgangs eine ausreichende Schnitttiefe für das Elektrowerkzeug bereitzustellen. Hierdurch ist es möglich, beim Arbeiten den unteren Klemmabschnitt unmittelbar auf dem Boden abzustützen, d.h. ein wie auch immer geartetes Aufbocken ist nicht erforderlich. Die Höhe des unteren Klemmabschnitts kann beispielsweise durch einfaches oder mehrfaches Abwinkeln oder Umbiegen eines oder mehrerer den unteren Klemmabschnitt bildender tafelförmiger Blechelemente erreicht werden. Wenn der untere Klemmabschnitt von einem Extrusionsprofil oder einem Strangpressprofil gebildet ist, dann kann Höhe durch die Dimensionierung und Formgebung dieses Profils vorgegeben werden.

Bei dem oberen Klemmabschnitt handelt es sich vorzugsweise um ein Profilelement, das z.B. aus Metall, beispielsweise aus Aluminium, oder aus Kunststoff bestehen kann. Bevorzugt ist der obere Klemmabschnitt als Führungsschiene ausgebildet, insbesondere nach Art einer herkömmlichen Führungsschiene für Elektrowerkzeuge wie z.B. Handkreissägen, Stichsägen oder Oberfräsen. Die Führungsschiene, also der obere Klemmabschnitt, kann mit einer oder mehreren Nuten oder mit einem oder mehreren durchgehenden oder unterbrochenen Stegen versehen sein, die sich in einer Längsrichtung des oberen Klemmabschnitts erstrecken und somit zur Führung des jeweiligen Elektrowerkzeugs dienen. Auch eine Kombination von einer oder mehreren Nuten und einem oder mehreren Stegen, die parallel versetzt zueinander verlaufen, ist möglich. Diese Mittel werden hier allgemein als Linearführungsmittel des oberen Klemmabschnitts bezeichnet, die insbesondere an der Oberseite des oberen Klemmabschnitts ausgebildet sind.

Auch eine als seitlicher Anschlag für das Elektrowerkzeug in Längsrichtung verlaufende Stufe an der Oberseite des oberen Klemmabschnitts kann ein Linearführungsmittel bilden.

Die Linearführungsmittel sind auf das oder die jeweiligen Elektrowerkzeuge abgestimmt. In der Praxis sind Elektrowerkzeuge und Führungsschienen unterschiedlicher Hersteller häufig ganz oder teilweise untereinander kompatibel. Die konkrete Ausgestaltung des oberen Klemmabschnitts bezüglich der Linearführungsmittel erfolgt vorzugsweise im Hinblick auf die Elektrowerkzeuge, mit denen die erfindungsgemäße Einklemmvorrichtung verwendbar sein soll.

Mit der erfindungsgemäßen Einklemmvorrichtung können grundsätzlich beliebige Werkstücke eingeklemmt werden. Eine bevorzugte Anwendung stellt das Trennen oder Kürzen - auch als Kappen bezeichnet - von langgestreckten Bauelementen dar, insbesondere von Rohren und anderen Rundmaterialien, beispielsweise aus Leicht- oder Buntmetallen oder aus Stahl oder Kunststoff. Auch viele andere langgestreckte Bauelemente wie beispielsweise Leisten oder Profilelemente aus Holz, Metall oder Kunststoff können mit Hilfe der erfindungsgemäßen Vorrichtung auf eine jeweils gewünschte Länge gebracht werden. Ferner können z.B. Kabelkanäle aus Blech oder Kunststoff mittels der erfindungsgemäßen Einklemmvorrichtung fixiert und bearbeitet werden.

Unabhängig von der Art eines jeweils zu bearbeitenden Werkstücks besteht der Vorteil der erfindungsgemäßen Einklemmvorrichtung darin, dass das Werkstück quasi in einem Zug fixiert und bearbeitet werden kann. Die Erfindung ermöglicht so ein einfaches und schnelles Arbeiten ohne zusätzliche Hilfsmittel.

Wie vorstehend bereits erwähnt, kann in manchen Ausführungsbeispielen vorgesehen sein, dass der obere Klemmabschnitt dazu ausgebildet ist, mit einem Elektrowerkzeug derart, insbesondere lösbar, gekoppelt zu werden, dass im gekoppelten Zustand der obere Klemmabschnitt mittels des Elektrowerkzeugs relativ zu dem unteren Klemmabschnitt bewegbar ist, um ein Werkstück einzuklemmen und freizugeben, und das Elektrowerkzeug entlang des oberen Klemmabschnitts geführt werden kann, um das eingeklemmte Werkstück zu bearbeiten.

Es sind bereits sogenannte Kappschienen-Handkreissägen bekannt, bei denen eine Handkreissäge und eine Führungsschiene, die beispielsweise eine Länge zwischen 0,3 m und 1 m aufweist, unverlierbar - aber lösbar - miteinander verbunden sind. Die Führungsschiene kann entfernt werden, um die Handkreissäge ohne diese Führungsschiene verwenden zu können. Mit einer derartigen Kappschienen-Säge können durch die integrierte Führungsschiene schnell und einfach Kappschnitte oder auch Tauch- und Ausschnitte durchgeführt werden. Eine Werkstückfixierung ist mit diesen bekannten Systemen allerdings nicht möglich. Gleichwohl kann das bekannte Konzept der Kopplung zwischen Elektrowerkzeug und Führungsschiene für die Kopplung zwischen Elektrowerkzeug und oberem Klemmabschnitt der erfindungsgemäßen Einklemmvorrichtung verwendet werden. So kann beispielsweise ein Kopplungsmechanismus zum Einsatz kommen, der - wie bei den bekannten Kappschienen-Sägen - ein Lösen des Elektrowerkzeugs von der Führungsschiene durch einfaches Betätigen einer einzigen Entriegelungstaste ermöglicht. Ein solcher Mechanismus ist beispielsweise bei den Kappschienen-Sägen der Anmelderin (Typenbezeichnung "KSS", z.B. Kappschienen-Säge KSS 50 cc oder Akku-Kappschienen-Säge KSS 60 18M bl") vorgesehen. Auf diesen Mechanismus und die entsprechende aufeinander abgestimmt Ausgestaltung der Führungsschiene einerseits und eines dazu passenden Elektrowerkzeugs, insbesondere einer Handkreissäge, andererseits wird hiermit ausdrücklich Bezug genommen.

In manchen Ausführungsbeispielen kann vorgesehen sein, dass der obere Klemmabschnitt dazu ausgebildet ist, das Elektrowerkzeug entlang einer geraden Arbeitsrichtung zu führen, die senkrecht zu einer Achse verläuft, um welche oder entlang welcher die Relativbewegung der beiden Klemmabschnitte erfolgt. Die Achse kann eine Schwenkachse sein, um welche die beiden Klemmabschnitte relativ zueinander verschwenkt werden können. Auf die Art und Weise der Relativbewegung zwischen den beiden Klemmabschnitten wird nachstehend näher eingegangen.

Wie vorstehend bereits erwähnt, kann die Relativbewegung der beiden Klemmabschnitte eine Schwenkbewegung sein. Hierdurch lässt sich auf einfache Weise eine Veränderung des Abstands zwischen den beiden Klemmabschnitten erreichen. Die beiden Klemmabschnitte können beispielsweise an einem gemeinsamen Ende gelenkig miteinander verbunden sein, so dass sie sich wie ein Scharnier öffnen (Freigabestellung) und Schließen (Klemmstellung) können. Das Ende, an dem die beiden Klemmabschnitte gelenkig miteinander verbunden sind, ist vorzugsweise dasjenige Ende, auf welches das Elektrowerkzeug während des Bearbeitungsvorgangs zu bewegt wird.

Der Ausgangspunkt des Elektrowerkzeugs für den Bearbeitungsvorgang befindet sich dann am anderen Ende des oberen Klemmabschnitts, so dass in dem Bereich zwischen den verbundenen Enden der beiden Klemmabschnitte und deren freien Enden ein Bereich vorhanden ist, in welchem ein zu bearbeitendes Werkstücke eingeklemmt werden kann.

Vorzugsweise ist die Verbindung zwischen den beiden Klemmabschnitten derart gewählt, dass beliebige Öffnungswinkel - z.B. innerhalb eines bestimmten Winkelbereichs von zum Beispiel 0° bis 45° oder mehr - zwischen den beiden Klemmabschnitten, insbesondere stufenlos, gebildet werden können, so dass grundsätzlich Werkstücke mit beliebigen Abmessungen, beispielsweise Rohre mit beliebigem, in der Praxis des jeweiligen Handwerks üblichen Durchmesser, bearbeitet werden können. Eine Beschränkung kann durch optionale, erfindungsgemäß also nicht zwingende, Positionierhilfen gegeben sein, worauf nachstehend näher eingegangen wird.

Die Ausgestaltung der mechanischen Verbindung zwischen den Klemmabschnitten als Schwenkbewegung ermöglicht es somit, den oberen Klemmabschnitt so weit von dem unteren Klemmabschnitt wegzuschwenken, dass das jeweilige Werkstück zwischen die beiden Klemmabschnitte eingebracht werden kann, woraufhin dann der obere Klemmabschnitt wieder zurückgeschwenkt wird, um die Einklemmvorrichtung zu schließen und eine klemmende Fixierung des Werkstücks zu erreichen.

Die mechanische Verbindung zwischen den beiden Klemmabschnitten kann eine Gelenkverbindung sein. Bei dieser Gelenkverbindung kann es sich um ein beliebiges Drehgelenk handeln, z.B. in Form eines Scharniers. Beispielsweise kann ein die Schwenkachse definierender Stift oder Bolzen vorgesehen sein, der sich durch entlang der Achse aufeinanderfolgend angeordnete Ösen erstreckt, die an den freien Enden des oberen Klemmabschnitts und des unteren Klemmabschnitts ausgebildet sind. Ein sicherer Zusammenhalt der Gelenkverbindung kann einfach durch eine entsprechende Passung des Bolzens und/oder durch einen Sicherungsring oder eine Sicherungsschraube am einen Bolzenende erfolgen.

Die erfindungsgemäße Einklemmvorrichtung muss aber nicht zwingend mehrteilig sein, sondern kann beispielsweise von einem einzigen, V-förmig gebogenen oder abgewinkelten Blechelement gebildet sein, so dass die beiden Klemmabschnitte die Schenkel des "V" bilden. Die mechanische Verbindung zwischen den beiden Klemmabschnitten wird dann von dem gebogenen oder abgewinkelten Bereich gebildet des Blechelementes gebildet. Durch weitere Biegungen und/oder Abwinkelungen des einzigen Blechelementes kann eine für eine ausreichende Höhe des unteren Klemmabschnitts sorgende Struktur vorgesehen sein. Es ist auch möglich, die Einklemmvorrichtung aus einem einzigen Extrusions- oder Strangpressprofil zu bilden, so dass die beiden Klemmabschnitte einstückig miteinander verbunden sind und jeweils einen Teil des Profils bilden.

Auch dann, wenn es sich bei den beiden Klemmabschnitten um separate Bauteile handelt, muss die mechanische Verbindung nicht von einem Drehgelenk gebildet sein. So ist es beispielsweise möglich, die Verbindung nach Art eines Filmscharniers, z.B. unter Verwendung eines flexiblen Materialabschnitts, der mit beiden Klemmabschnitten fest verbunden ist, oder nach Art eines Laschenscharniers auszubilden, z.B. unter Verwendung eines Materialabschnitt, der mit dem einen Klemmabschnitt fest verbunden und mit dem anderen Klemmabschnitt beweglich in Eingriff steht, so dass eine relative Verschwenkbarkeit der beiden Klemmabschnitte gegeben ist.

Die Relativbewegung zwischen den beiden Klemmabschnitten ist nicht auf eine Schwenkbewegung beschränkt. So kann beispielsweise zwischen den beiden Klemmabschnitten eine wie auch immer geartete Linearführung vorgesehen sein, die eine geführte Veränderung des Abstands zwischen den beiden Klemmabschnitten durch Anheben und Absenken des oberen Klemmabschnitts relativ zum unteren Klemmabschnitt ermöglicht. Alternativ können die beiden Klemmabschnitte auch durch einen Scherenbeschlag miteinander verbunden sein. Auch hierbei braucht sich der Benutzer um die richtige Ausrichtung der beiden Klemmabschnitte relativ zueinander jeweils nicht zu kümmern. Der Abstand zwischen den beiden Klemmabschnitten ist dann jeweils über deren gesamte Länge konstant.

Gegenüber einer solchen, erfindungsgemäß ebenfalls möglichen linearen Relativbewegung besteht ein Vorteil der davor erläuterten Schwenkbewegung darin, dass die beiden Klemmabschnitte V-artig auseinanderlaufen, so dass die Hebelwirkung der Gewichtskraft des Elektrowerkzeugs besonders gut zur Erzielung der Klemmkraft genutzt werden kann, wenn der Ausgangspunkt des Elektrowerkzeugs für den Bearbeitungsvorgang im Bereich des freien Endes des oberen Klemmabschnitts liegt.

Wie ebenfalls vorstehend bereits erwähnt, kann der obere Klemmabschnitt an seiner Oberseite wenigstens ein Linearführungsmittel aufweisen, das eine Arbeitsrichtung für das Elektrowerkzeug festlegt. Hierbei kann es sich beispielsweise um eine Führungsnut oder einen durchgehenden oder unterbrochenen Führungssteg handeln. Mehrere derartige Führungsmittel, entweder gleichartige oder unterschiedliche, können - parallel versetzt zueinander verlaufend - vorgesehen sein. Das oder die Linearführungsmittel sind auf eine entsprechende Ausgestaltung an der Unterseite des oder derjenigen Elektrowerkzeuge angepasst, mit denen die erfindungsgemäße Einklemmvorrichtung verwendbar sein soll. Die Unterseite von Elektrowerkzeugen wird in der Praxis meist von sogenannten Grundplatten gebildet, die zur Abstützung des Elektrowerkzeugs auf einer Werkstückoberfläche oder auf einer Führungsschiene dienen. In vielen Fällen können mit Elektrowerkzeugen Schrägschnitte ausgeführt werden, die auch als Gehrungsschnitte bezeichnet werden. Hierzu kann ein das jeweilige Bearbeitungswerkzeug - bei einer Handkreissäge also das Sägeblatt - umfassender Maschinenteil des Elektrowerkzeugs gegenüber der erwähnten Grundplatte verschwenkt werden. Die Schwenkachse verläuft hierbei parallel zur Vorschubrichtung des Elektrowerkzeugs.

Wenn das jeweilige Elektrowerkzeug über eine derartige Schrägschnittfunktion verfügt, können mit Hilfe der erfindungsgemäßen Einklemmvorrichtung folglich auch Gehrungsschnitte an den eingeklemmten Werkstücken ausgeführt werden.

In manchen Ausführungsbeispielen ist vorgesehen, dass zumindest der untere Klemmabschnitt wenigstens eine Positionierhilfe für ein zu bearbeitendes Werkstück aufweist, durch die ein zu bearbeitendes Werkstück bereits vor Erreichen der Klemmstellung zumindest bezüglich einer Arbeitsrichtung des Elektrowerkzeugs am unteren Klemmabschnitt gehalten werden kann.

Die Positionierhilfe kann ein- oder mehrteilig ausgebildet sein. Des Weiteren kann die Positionierhilfe einstückig am unteren Klemmabschnitt ausgebildet sein, beispielsweise durch eine entsprechende, z.B. durch Biegen oder Kanten erzeugte, Formgebung. Alternativ kann es sich bei der Positionierhilfe um ein separates Bauteil handeln, das mit dem unteren Klemmabschnitt verbunden ist. Die Verbindung kann lösbar sein. Bei einer lösbaren Verbindung kann die Positionierhilfe verstellt oder ausgewechselt werden. Ein Verstellen der Positionierhilfe kann dazu dienen, die Position für das zu bearbeitende Werkstück entlang der Arbeitsrichtung des Elektrowerkzeugs zu verändern. Im Fall von relativ zueinander um eine Achse verschwenkbaren Klemmabschnitten kann so beispielsweise der Abstand des zu bearbeitenden Werkstücks von der Schwenkachse vorgegeben werden. Alternativ oder zusätzlich kann ein Verstellen der Positionierhilfe auch dazu dienen, die Orientierung eines zu bearbeitenden Werkstücks relativ zur Arbeitsrichtung des Elektrowerkzeugs vorzugeben. So kann die Positionierhilfe beispielsweise auf dem unteren Klemmabschnitt verdrehbar angeordnet sein, um so ein Werkstück, beispielsweise ein Rohr, in Bezug auf die Arbeitsrichtung des Elektrowerkzeugs schräg auszurichten.

Die Positionierhilfe kann beispielsweise einfach als Erhöhung auf der Oberseite des unteren Klemmabschnitts vorgesehen sein und somit als ein Anschlag für das Werkstück dienen, das auf der Oberseite des unteren Klemmabschnitts aufliegt. Alternativ kann die Positionierhilfe als eine Auflage für das Werkstück dienen, wobei bevorzugt die Positionierhilfe mit einer Vertiefung zur Aufnahme des Werkstücks versehen ist. Die Vertiefung kann beispielsweise im Querschnitt V-förmig ausgebildet sein. Der Öffnungswinkel der das "V" bildenden Schenkel kann derart gewählt sein, dass Werkstücke mit in einem vorgegebenen Größenbereich liegenden Abmessungen, beispielsweise Rohre mit in einem vorgegebenen Bereich liegenden Durchmessern, von der Positionierhilfe aufgenommen und gehalten werden können.

Zusätzlich kann vorgesehen sein, dass auch der obere Klemmabschnitt eine Positionierhilfe aufweist, die zumindest in der Klemmstellung mit der Positionierhilfe des unteren Klemmabschnitts zusammenwirkt, um das zu bearbeitende Werkstück gemeinsam zu halten. Auf diese Weise können die beiden Positionierhilfen zusammenwirkende Klemm- oder Spannbacken bilden.

Die untere Positionierhilfe und/oder die obere Positionierhilfe kann einzelne Abschnitte aufweisen, die in Längsrichtung eines zu fixierenden Werkstücks beabstandet und/oder unterschiedlich ausgebildet sind. Unterschiede können beispielsweise in der Tiefe eines jeweiligen Aufnahmebereichs des Abschnitts und/oder in dem Öffnungswinkel einer als Aufnahme dienenden, V-förmigen Vertiefung eines jeweiligen Abschnitts liegen. Auf diese Weise ist es möglich, Werkstücke mit unterschiedlichen Abmessungen, beispielsweise Rohre mit unterschiedlichen Durchmessern, jeweils sicher und zuverlässig zu fixieren, ohne die Positionierhilfen hierfür auswechseln zu müssen.

In einigen Ausführungsbeispielen ist eine Mehrzahl von unterschiedlichen Positionierhilfen vorgesehen, die jeweils lösbar an dem unteren Klemmabschnitt anbringbar und gegeneinander auswechselbar sind. Insbesondere sind mehrere unterschiedliche Sätze von Positionierhilfen vorgesehen, die jeweils eine Positionierhilfe für den unteren Klemmabschnitt und eine dieser zugeordnete Positionierhilfe für den oberen Klemmabschnitt umfassen.

Die Auswechselbarkeit der unterschiedlichen Positionierhilfen bzw. der unterschiedlichen Sätze von Positionierhilfen ermöglicht es, die erfindungsgemäße Einklemmvorrichtung an unterschiedliche Formen und/oder Größen von Werkstücken anzupassen. So können z.B. mit einer Einklemmvorrichtung wahlweise Rohre oder Kabelkanäle bearbeitet werden.

Die Positionierhilfen können, insbesondere dann, wenn sie nicht einstückig mit dem jeweiligen Klemmabschnitt ausgebildet sind, beispielsweise aus einem Kunststoffmaterial hergestellt sein.

In manchen Ausführungsformen weist der untere Klemmabschnitt an seiner Unterseite wenigstens eine ebene Aufstandsfläche oder wenigstens eine Gruppe von gemeinsam eine Aufstandsebene definierenden Auflagestellen auf.

Die Einklemmvorrichtung kann hierdurch nicht verkippen, wenn sie beispielsweise auf dem Boden aufliegt, wobei für diese kippsichere Auflage keine zusätzlichen Hilfsmittel benötigt werden.

Senkrecht zur Arbeitsrichtung des Elektrowerkzeugs gemessen können die beiden Klemmabschnitte jeweils eine Breite im Bereich von etwa 15 bis 40 cm aufweisen, wobei die beiden Klemmabschnitte gleich breit sein können, aber nicht müssen. Die parallel zur Arbeitsrichtung des Elektrowerkzeugs gemessene Länge der beiden Klemmabschnitte, die gleich lang sein können, aber nicht müssen, liegt z.B. jeweils im Bereich zwischen 0,3 m bis 1 m.

Die Erfindung betrifft außerdem ein tragbares System zum Bearbeiten von Werkstücken, umfassend ein tragbares handgeführtes Elektrowerkzeug und eine tragbare Einklemmvorrichtung, wie hierin offenbart, wobei das Elektrowerkzeug und der obere Klemmabschnitt der Einklemmvorrichtung derart, insbesondere lösbar, miteinander koppelbar oder gekoppelt sind, dass im gekoppelten Zustand der obere Klemmabschnitt mittels des Elektrowerkzeugs relativ zu dem unteren Klemmabschnitt bewegbar ist, um ein Werkstück einzuklemmen und freizugeben, und das Elektrowerkzeug entlang des oberen Klemmabschnitts geführt werden kann, um das eingeklemmte Werkstück zu bearbeiten.

Des Weiteren betrifft die Erfindung ein tragbares handgeführtes Elektrowerkzeug zum Bearbeiten von Werkstücken, beispielsweise eine Handkreissäge zum Kürzen von Rohren oder Profilen, mit einer Einklemmvorrichtung wie hierin offenbart, wobei der obere Klemmabschnitt der Einklemmvorrichtung eine Führungsschiene ist, die mit dem Elektrowerkzeug lösbar gekoppelt ist.

Das eigentliche Werkzeug des Elektrowerkzeugs, bei einer Handkreissäge also das Sägeblatt, wird bevorzugt wie beim Arbeiten mit einer herkömmlichen Führungsschiene seitlich außen neben dem rechten oder linken Seitenrand des oberen Klemmabschnitts geführt. Alternativ kann der obere Klemmabschnitt eine innenliegende Längsaussparung aufweisen, durch welche das Werkzeug hindurch nach unten vorsteht und das jeweils eingeklemmte Werkstück bearbeitet. Dies kann zum Beispiel für das Arbeiten mit einer Oberfräse vorteilhaft sein.

Die Erfindung wird im Folgenden beispielhaft unter Bezugnahme auf die Zeichnung beschrieben. Es zeigen:

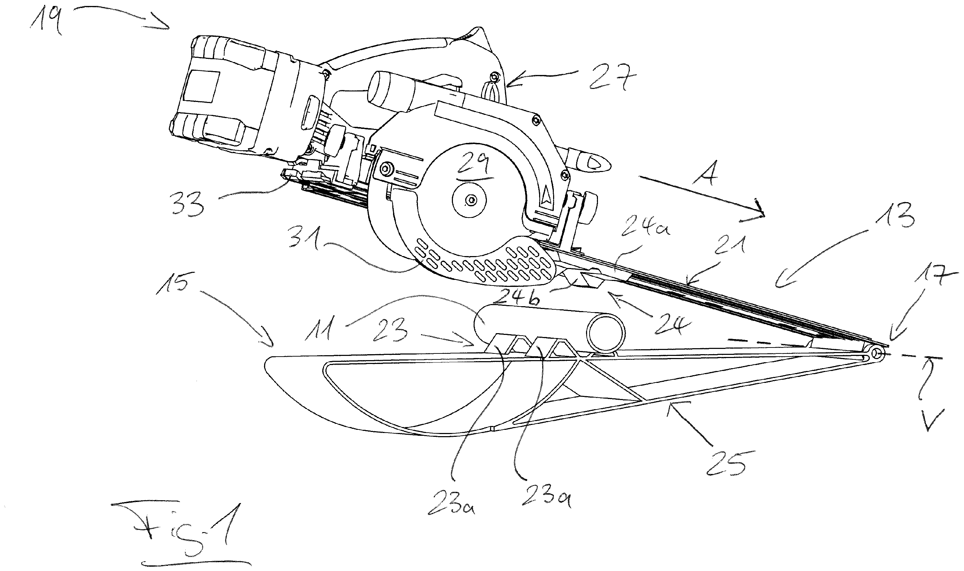

- Fig. 1 bis 4: verschiedene Ansichten einer erfindungsgemäßen Einklemmvorrichtung, deren oberer Klemmabschnitt mit einem Elektrowerkzeug, hier einer Handkreissäge, gekoppelt ist.

Die in den Fig. 1 bis 4 dargestellte erfindungsgemäße Einklemmvorrichtung umfasst einen unteren Klemmabschnitt 15 und einen oberen Klemmabschnitt 13. Mit dem oberen Klemmabschnitt 13 ist ein Elektrowerkzeug in Form einer Handkreissäge 19 gekoppelt.

Zusammen mit dem Elektrowerkzeug 19 bildet die Einklemmvorrichtung folglich ein erfindungsgemäßes tragbares System, mit welchem zu bearbeitende Werkstücke 11 ohne zusätzliche Hilfsmittel eingeklemmt und im eingeklemmten Zustand bearbeitet werden können. Anders ausgedrückt kann durch die erfindungsgemäße Einklemmvorrichtung ein herkömmliches Elektrowerkzeug wie beispielsweise eine Handkreissäge zu einem erfindungsgemäßen Elektrowerkzeug umfunktioniert werden, welches ohne weitere Hilfsmittel Werkstücke schnell und einfach einklemmen und bearbeiten kann und welches auch als Kapp-Säge mit integrierter Werkstückfixierung bezeichnet werden kann.

Der untere Klemmabschnitt 15 ist von einem Abschnitt eines Extrusionsprofils oder Strangpressprofils z.B. aus Aluminium oder Kunststoff gebildet, wie es als mögliches Ausführungsbeispiel im Einleitungsteil erwähnt ist. Das den unteren Klemmabschnitt 15 bildende Profil besitzt dabei eine keilförmige Struktur, welche eine ebene Oberseite und an ihrer Unterseite eine ebene Aufstandsfläche 25 aufweist, mit welcher die Einklemmvorrichtung als Ganzes beispielsweise auf den Boden kippsicher abgestützt werden kann.

An seinem vorderen Ende ist der untere Klemmabschnitt 15 gelenkig mit einer Führungsschiene 13 verbunden, die einen oberen Klemmabschnitt der erfindungsgemäßen Einklemmvorrichtung bildet. Die gelenkige Verbindung 17 zwischen den beiden Klemmabschnitten 13, 15 ist lösbar, wobei aber für den bestimmungsgemäßen Gebrauch der Einklemmvorrichtung diese Lösbarkeit nicht benötigt wird.

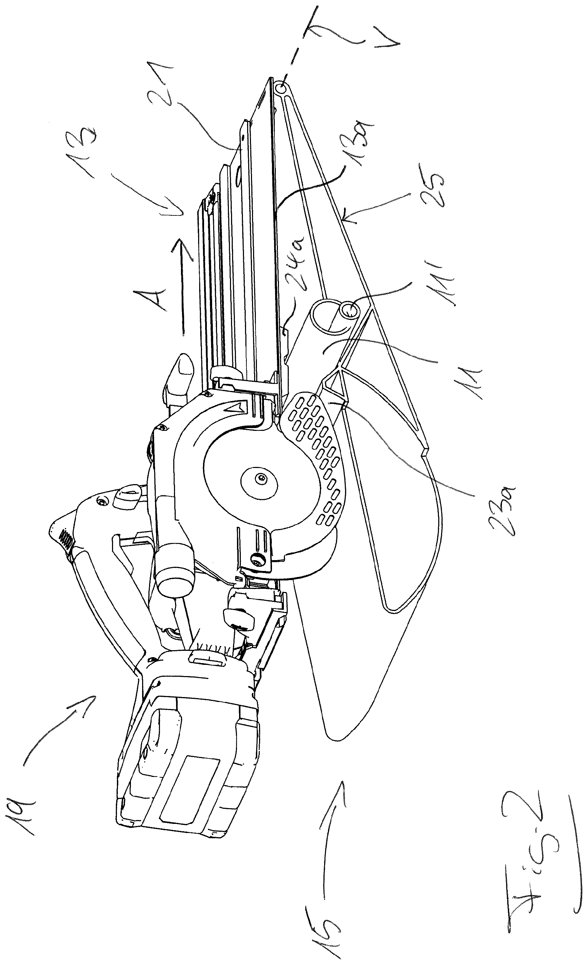

Wie insbesondere Fig. 2 zeigt, ist die Führungsschiene 13 an ihrer Oberseite mit einem sich in Längsrichtung und somit parallel zu einer Arbeitsrichtung A des Elektrowerkzeugs 19 erstreckenden Steg 21 versehen, der ein Linearführungsmittel des oberen Klemmabschnitts 13 für das Elektrowerkzeug 19 bildet. An der Unterseite einer Grundplatte 33 des Elektrowerkzeugs 19 ist eine entsprechende Längsausnehmung 35 ausgebildet, deren Breite und Tiefe auf die Breite und Höhe des Führungsstegs 21 des oberen Klemmabschnitts 13 abgestimmt ist.

Während eines Bearbeitungsvorgangs, wenn das Elektrowerkzeug 19 auf dem oberen Klemmabschnitt 13 in Arbeitsrichtung A von der in den Fig. 1 bis 4 dargestellten Ausgangsposition am freien Ende des oberen Klemmabschnitts 13 in Richtung der Verbindung 17 zwischen den beiden Klemmabschnitten 13, 15 bewegt wird, wirken das Elektrowerkzeug 19 und der obere Klemmabschnitt 13 folglich in herkömmlicher Weise wie ein Elektrowerkzeug und eine diesem zugeordnete Führungsschiene zusammen.

Des Weiteren ist das Elektrowerkzeug 19 mit dem oberen Klemmabschnitt 13 derart lösbar gekoppelt, dass das Elektrowerkzeug 19 nicht lediglich auf dem oberen Klemmabschnitt 13 aufliegt, sondern in allen Richtungen mit Ausnahme der Arbeitsrichtung A derart fest mit dem oberen Klemmabschnitt 13 verbunden ist, dass das Elektrowerkzeug 19 und der oberer Klemmabschnitt 13 eine als Ganzes bewegbare Einheit bilden. So kann der am Elektrowerkzeug 19 angreifende Benutzer mittels des Elektrowerkzeugs 19 den oberen Klemmabschnitt 13 anheben, um eine Freigabestellung zu erreichen, und - unter Ausnutzung des Eigengewichts des Elektrowerkzeugs 19 - absenken, um eine Klemmstellung zu erreichen.

Die lösbare Kopplung zwischen Elektrowerkzeug 19 und oberem Klemmabschnitt 13 kann - wie im Einleitungsteil bereits erwähnt - so wie bei den bekannten Kappschienen-Sägen der Anmelderin ausgebildet sein.

Der obere Klemmabschnitt 13 und der untere Klemmabschnitt 15 sind aufgrund der gelenkigen Verbindung 17 stufenlos relativ zueinander verschwenkbar. In den

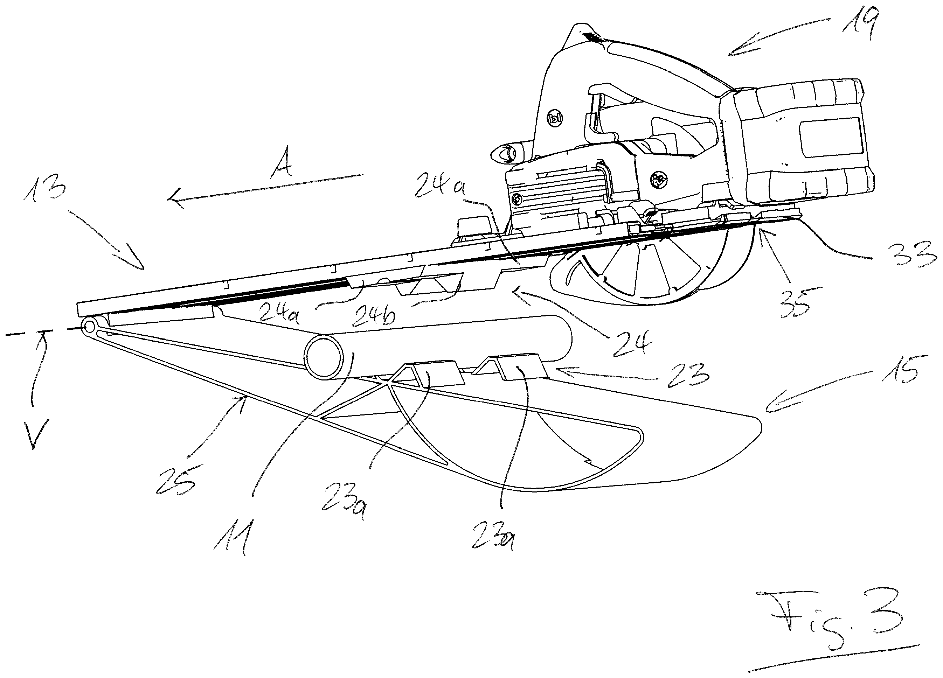

Fig. 1 und 3 ist die Einklemmvorrichtung in einem geöffneten Zustand dargestellt, die eine Freigabestellung bildet, in der ein zu bearbeitendes Werkstück 11 zwischen die beiden Klemmabschnitte 13, 15 eingebracht und nach erfolgter Bearbeitung wieder entnommen werden kann.

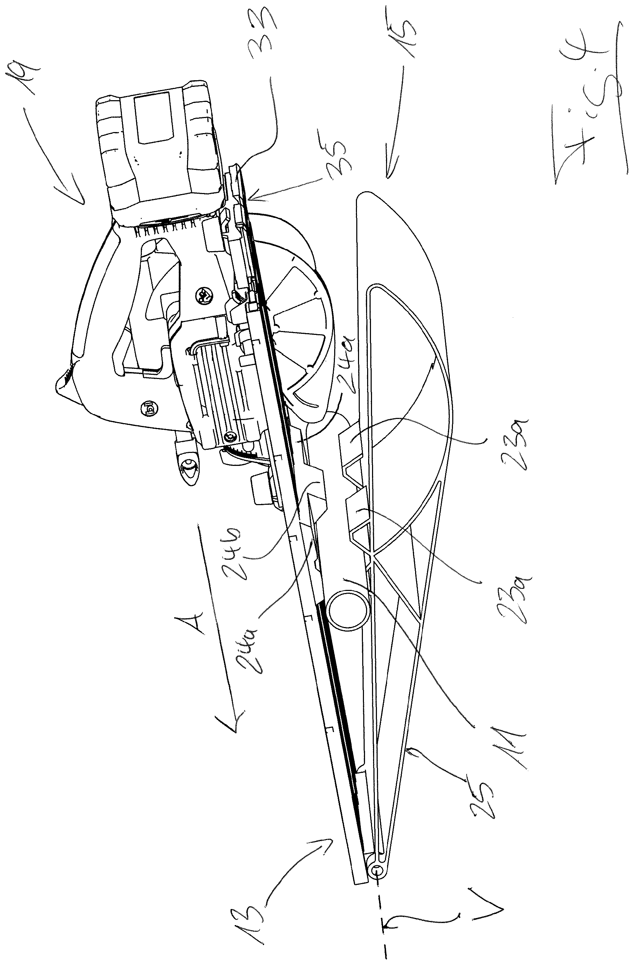

Die Fig. 2 und 4 zeigen die Einklemmvorrichtung in einem geschlossenen Zustand, in dem sich die beiden Klemmabschnitte 13, 15 in einer Klemmstellung befinden. In dieser Klemmstellung wirken nicht die beiden einander zugewandten ebenen Seiten des oberen Klemmabschnitts 13 und des unteren Klemmabschnitts 15 mit dem jeweiligen Werkstück 11 zusammen. Vielmehr sind beide Klemmabschnitte jeweils mit einer Positionierhilfe 23 bzw. 24 versehen.

Zwei seitlich angeordnete, identisch ausgeführte Abschnitte 23a der unteren Positionierhilfe 23 bilden gemeinsam eine V-förmige Aufnahme für zu bearbeitende Werkstücke 11 auf der Oberseite des unteren Klemmabschnitts 15. Auf diese Weise bilden die beiden Abschnitte 23a gemeinsam eine untere Klemm- oder Spannbacke.

Im gleichen Abstand von der Schwenkachse V der Gelenkverbindung zwischen den beiden Klemmabschnitten 13, 15 wie die untere Positionierhilfe 23 ist an der Unterseite der den oberen Klemmabschnitt bildenden Führungsschiene 13 die Positionierhilfe 24 angeordnet. Diese umfasst zwei seitlich angeordnete und somit mit den beiden unteren Abschnitten 23a ausgerichtete Abschnitte 24a von relativ geringer Höhe und dazwischen einen Abschnitt 24b von größerer Höhe. Die beiden äußeren Abschnitte 24a und der mittlere Abschnitt 24b sind jeweils mit einer V-förmigen Aufnahme versehen. Auf diese Weise bilden die Abschnitte 24a, 24b gemeinsam eine obere Klemm- oder Spannbacke.

Durch Zusammenwirken dieser beiden Backen, also der beiden Positionierhilfen 23, 24, können Werkstücke 11 unterschiedlicher Größe, insbesondere Rohre unterschiedlichen Durchmessers, sicher und zuverlässig fixiert werden.

Wenn der untere Klemmabschnitt 13 von einem Extrusions- oder Strangpressprofil gebildet ist, kann die untere Positionierhilfe 23 bereits bei der Herstellung des Profils ausgebildet werden. Der Zwischenraum zwischen den beiden äußeren Abschnitten 23a kann durch Nachbearbeitung gebildet werden.

Um diese flexiblen Einsatzmöglichkeiten der erfindungsgemäßen Einklemmvorrichtung zu veranschaulichen, sind in Fig. 2 gleichzeitig zwei Rohre 11, 11' unterschiedlichen Durchmessers dargestellt.

Um von einem Werkstück 11 einen eine jeweils gewünschte Länge aufweisenden Teil abzutrennen, wird das Werkstück 11 bei geöffneter Einklemmvorrichtung in die untere Positionierhilfe 23 eingelegt. So ist das Werkstück 11 bereits vor dem Schließen der Einklemmvorrichtung bezüglich der Arbeitsrichtung A gesichert. Es kann aber entlang seiner Längsrichtung in der von der Positionierhilfe 23 gebildeten Aufnahme verschoben werden. So kann der Benutzer das Werkstück 11 in diesem Ausführungsbeispiel ausreichend weit nach rechts - in Arbeitsrichtung A gesehen - aus der Einklemmvorrichtung herausragen lassen. Die Schnittebene ist durch den Abstand des Sägeblatts 29 der Handkreissäge 19 von der rechten Au-ßenkante 13a (vgl. Fig. 2) der Führungsschiene 13 bestimmt.

Wie bei der herkömmlichen Benutzung der Handkreissäge 19 kann das Abtrennen der gewünschten Länge nach Anriss auf dem Werkstück 11 erfolgen. Alternativ kann mit einem nicht dargestellten Anschlag für das Werkstück 11 gearbeitet werden.

Im geschlossenen Zustand gemäß Fig. 1 und 4, also bei in der Klemmstellung befindlichen Klemmabschnitten 13, 15, ist das Werkstück 11 durch die Gewichtskraft des Elektrowerkzeugs 19 und die zusätzliche, vom Benutzer ausgeübte Kraft sicher fixiert, so dass das Werkstück 11 weder in Längsrichtung verrutschen noch sich um die eigene Achse drehen kann. Durch die von den beiden Positionierhilfen 23, 24 gebildeten Spann- oder Klemmbacken ist das Werkstück 11 zusätzlich gegen Bewegung in Arbeitsrichtung A gesichert.

Die Positionierhilfen 23, 24 können mit einem Gummibelag oder einer Haftbeschichtung versehen sein, um ein Verdrehen oder Verrutschen des Werkstücks 11 weiter zu erschweren.

Ein wie auch immer gearteter Belag oder Beschichtung der Positionierhilfen 23, 24 kann zudem eine ungleichmäßige Beaufschlagung des Werkstücks 11 durch die einzelnen Abschnitte der Positionierhilfen ausgleichen und so zu einer sicheren und zuverlässigen Werkstückfixierung beitragen.

### Bezugszeichenliste

- 11: Werkstück
- 13: oberer Klemmabschnitt
- 13a: rechte Außenkante
- 15: unterer Klemmabschnitt
- 17: mechanische Verbindung
- 19: Elektrowerkzeug, Handkreissäge
- 21: Linearführungsmittel, Steg
- 23: Positionierhilfe
- 23a: Abschnitt
- 24: Positionierhilfe
- 24a: Abschnitt
- 24b: Abschnitt
- 25: Aufstandsfläche
- 27: Maschinenteil
- 29: Sägeblatt
- 31: Pendelhaube
- 33: Grundplatte
- 35: Längsausnehmung

- A: Arbeitsrichtung
- V: Achse

## Patentansprüche

1. Tragbare Vorrichtung zum Einklemmen von zu bearbeitenden Werkstücken (11), beispielsweise von mittels einer Handkreissäge zu kürzenden Rohren oder Profilen,
mit einem unteren Klemmabschnitt (15) und einem oberen Klemmabschnitt (13), die relativ zueinander zwischen einer Klemmstellung und einer Freigabestellung bewegbar sind,
wobei die Relativbewegung der beiden Klemmabschnitte (13, 15) durch eine mechanische Verbindung (17) zwischen den beiden Klemmabschnitten (13, 15) zwangsgeführt ist, und
**dadurch gekennzeichnet, dass**
der obere Klemmabschnitt (13) zum Abstützen und geradlinigen Führen eines tragbaren handgeführten Elektrowerkzeugs (19) ausgebildet ist, mit dem ein in der Klemmstellung zwischen den beiden Klemmabschnitten (13, 15) unter Ausnutzung des Eigengewichts des Elektrowerkzeugs (19) eingeklemmtes Werkstück (11) bearbeitet wird.

2. Vorrichtung nach Anspruch 1,
wobei der obere Klemmschnitt (13) dazu ausgebildet ist, mit einem Elektrowerkzeug (19) derart, insbesondere lösbar, gekoppelt zu werden, dass im gekoppelten Zustand der obere Klemmabschnitt (13) mittels des Elektrowerkzeugs (19) relativ zu dem unteren Klemmabschnitt (15) bewegbar ist, um ein Werkstück (11) einzuklemmen und freizugeben, und das Elektrowerkzeug (19) entlang des oberen Klemmabschnitts (13) geführt werden kann, um das eingeklemmte Werkstück (11) zu bearbeiten.

3. Vorrichtung nach Anspruch 1 oder 2,
wobei der obere Klemmabschnitt (13) dazu ausgebildet ist, das Elektrowerkzeug (19) entlang einer geraden Arbeitsrichtung (A) zu führen, die senkrecht zu einer Achse (V) verläuft, um welche oder entlang welcher die Relativbewegung der beiden Klemmabschnitte (13, 15) erfolgt.

4. Vorrichtung nach einem der vorhergehenden Ansprüche,
wobei die Relativbewegung der beiden Klemmabschnitte (13, 15) eine Schwenkbewegung ist.

5. Vorrichtung nach einem der vorhergehenden Ansprüche,
wobei die mechanische Verbindung (17) zwischen den beiden Klemmabschnitten eine Gelenkverbindung ist.

6. Vorrichtung nach einem der vorhergehenden Ansprüche,
wobei der obere Klemmabschnitt (13) an seiner Oberseite wenigstens ein eine Arbeitsrichtung (A) für das Elektrowerkzeug (19) festlegendes Linearführungsmittel (21) aufweist, insbesondere eine Führungsnut oder einen durchgehenden oder unterbrochenen Führungssteg.

7. Vorrichtung nach einem der vorhergehenden Ansprüche,
wobei der obere Klemmabschnitt (13) als eine Führungsschiene für das Elektrowerkzeug (19) ausgebildet ist.

8. Vorrichtung nach einem der vorhergehenden Ansprüche,
wobei zumindest der untere Klemmabschnitt (15) wenigstens eine Positionierhilfe (23) für ein zu bearbeitendes Werkstück (11) aufweist, durch welche ein zu bearbeitendes Werkstück (11) bereits vor Erreichen der Klemmstellung zumindest bezüglich einer Arbeitsrichtung (A) des Elektrowerkzeugs (19) am unteren Klemmabschnitt (15) gehalten werden kann, wobei vorzugsweise auch der obere Klemmabschnitt (13) eine Positionierhilfe (24) aufweist, die zumindest in der Klemmstellung mit der Positionierhilfe (23) des unteren Klemmabschnitts (15) zusammenwirkt, um das zu bearbeitende Werkstück (11) gemeinsam zu halten.

9. Vorrichtung nach Anspruch 8,
wobei eine Mehrzahl von unterschiedlichen Positionierhilfen (23) vorgesehen ist, die jeweils lösbar an dem unteren Klemmabschnitt (15) anbringbar und gegeneinander auswechselbar sind, wobei insbesondere mehrere unterschiedliche Sätze von Positionierhilfen vorgesehen sind, die jeweils eine Positionierhilfe (23) für den unteren Klemmabschnitt (15) und eine dieser zugeordnete Positionierhilfe (24) für den oberen Klemmabschnitt (13) umfassen.

10. Vorrichtung nach einem der vorhergehenden Ansprüche,
wobei der untere Klemmabschnitt (15) an seiner Unterseite wenigstens eine ebene Aufstandsfläche (25) oder wenigstens eine Gruppe von gemeinsam eine Aufstandsebene definierenden Auflagestellen aufweist.

11. Vorrichtung nach einem der vorhergehenden Ansprüche,
wobei der untere Klemmabschnitt (15) von einem Extrusionsprofil oder einem Strangpressprofil gebildet ist, insbesondere aus Aluminium oder aus Kunststoff.

12. Tragbares System zum Bearbeiten von Werkstücken (11), umfassend ein tragbares handgeführtes Elektrowerkzeug (19) und eine tragbare Einklemmvorrichtung nach einem der vorhergehenden Ansprüche, wobei das Elektrowerkzeug (19) und der obere Klemmabschnitt (13) der Einklemmvorrichtung derart, insbesondere lösbar, miteinander koppelbar oder gekoppelt sind, dass im gekoppelten Zustand der obere Klemmabschnitt (13) mittels des Elektrowerkzeugs (19) relativ zu dem unteren Klemmabschnitt (15) bewegbar ist, um ein Werkstück (11) einzuklemmen und freizugeben, und das Elektrowerkzeug (19) entlang des oberen Klemmabschnitts (13) geführt werden kann, um das eingeklemmte Werkstück (11) zu bearbeiten.

13. Tragbares handgeführtes Elektrowerkzeug (19) zum Bearbeiten von Werkstücken (11), beispielsweise Handkreissäge zum Kürzen von Rohren oder Profilen, mit einer Einklemmvorrichtung nach einem der Ansprüche 1 bis 10, wobei der obere Klemmabschnitt (13) der Einklemmvorrichtung eine Führungsschiene ist, die mit dem Elektrowerkzeug (19) lösbar gekoppelt ist.

14. Vorrichtung, System oder Elektrowerkzeug nach einem der vorhergehenden Ansprüche,
wobei das Elektrowerkzeug (19) eine Handkreissäge, ein Winkelschleifer, eine Stichsäge oder eine Oberfräse ist.

## Claims

1. A portable apparatus for clamping workpieces (11) to be processed, for example pipes or profiles to be shortened by means of a hand-held circular saw,
comprising a lower clamping section (15) and an upper clamping section (13) which are movable relative to one another between a clamping position and a release position,
wherein the relative movement of the two clamping sections (13, 15) is compulsorily guided by a mechanical connection (17) between the two clamping sections (13, 15),
**characterized in that**
the upper clamping section (13) is configured for the support and straight-line guidance of a portable hand-held electric tool (19) with which a workpiece (11) is processed that is clamped in the clamping position between the two clamping sections (13, 15) using the inherent weight of the electric tool (19).

2. An apparatus according to claim 1,
wherein the upper clamping section (13) is configured to be coupled, in particular releasably coupled, to an electric tool (19) such that, in the coupled state, the upper clamping section (13) can be moved relative to the lower clamping section (15) by means of the electric tool (19) in order to clamp and release a workpiece (11) and the electric tool (19) can be guided along the upper clamping section (13) to process the clamped workpiece (11).

3. An apparatus according to claim 1 or 2,
wherein the upper clamping section (13) is configured to guide the electric tool (19) along a straight working direction (A) which extends perpendicular to an axis (V) about which or along which the relative movement of the two clamping sections (13, 15) takes place.

4. An apparatus according to any one of the preceding claims,
wherein the relative movement of the two clamping sections (13, 15) is a pivot movement.

5. An apparatus according to any one of the preceding claims,
wherein the mechanical connection (17) between the two clamping sections is an articulated joint.

6. An apparatus according to any one of the preceding claims,
wherein the upper clamping section (13) has, at its upper side, at least one linear guide means (21) defining a working direction (A) for the electric tool (19), in particular a guide groove or a continuous or interrupted guide web.

7. An apparatus according to any one of the preceding claims,
wherein the upper clamping section (13) is configured as a guide rail for the electric tool (19).

8. An apparatus according to any one of the preceding claims,
wherein at least the lower clamping section (15) has at least one positioning aid (23) for a workpiece (11) to be processed, by which positioning aid (23) a workpiece (11) to be processed can be held at the lower clamping section (15) at least with respect to a working direction (A) of the electric tool (19) even before reaching the clamping position, wherein the upper clamping section (13) preferably also has a positioning aid (24) which, at least in the clamping position, cooperates with the positioning aid (23) of the lower clamping section (15) to jointly hold the workpiece (11) to be processed.

9. An apparatus according to claim 8,
wherein a plurality of different positioning aids (23) are provided which are each releasably attachable to the lower clamping section (15) and exchangeable against one another, wherein in particular a plurality of different sets of positioning aids are provided which each comprise a positioning aid (23) for the lower clamping section (15) and a positioning aid (24) associated therewith for the upper clamping section (13).

10. An apparatus according to any one of the preceding claims,
wherein the lower clamping section (15) has, at its lower side, at least one planar contact surface (25) or at least one group of support points jointly defining a contact plane.

11. An apparatus according to any one of the preceding claims,
wherein the lower clamping section (15) is formed by an extrusion profile or an extruded profile, in particular composed of aluminum or plastic.

12. A portable system for processing workpieces (11), comprising a portable hand-held electric tool (19) and a portable clamping apparatus according to any one of the preceding claims, wherein the electric tool (19) and the upper clamping section (13) of the clamping apparatus are, in particular releasably, couplable or coupled to one another such that, in the coupled state, the upper clamping section (13) can be moved relative to the lower clamping section (15) by means of the electric tool (19) in order to clamp and release a workpiece (11) and the electric tool (19) can be guided along the upper clamping section (13) to process the clamped workpiece (11).

13. A portable hand-held electric tool (19) for processing workpieces (11), for example a hand-held circular saw for shortening pipes or profiles, comprising a clamping apparatus according to any one of the claims 1 to 10, wherein the upper clamping section (13) of the clamping apparatus is a guide rail which is releasably coupled to the electric tool (19).

14. An apparatus, a system or an electric tool according to any one of the preceding claims,
wherein the electric tool (19) is a hand-held circular saw, an angle grinder, a jigsaw or a router.

## Revendications

1. Dispositif portable destiné à serrer des pièces à usiner (11), par exemple des tubes ou des profilés à raccourcir au moyen d'une scie circulaire portative,
comprenant une partie de serrage inférieure (15) et une partie de serrage supérieure (13), qui sont mobiles l'une par rapport à l'autre entre une position de serrage et une position de libération,
le mouvement relatif des deux parties de serrage (13, 15) étant guidé de manière forcée par une liaison mécanique (17) entre les deux parties de serrage (13, 15),
**caractérisé en ce que**
la partie de serrage supérieure (13) est conçue pour soutenir et guider en ligne droite un outil électrique portable (19) guidé à la main, permettant d'usiner une pièce (11), serrée entre les deux parties de serrage (13, 15) dans la position de serrage en exploitant le poids propre de l'outil électrique (19).

2. Dispositif selon la revendication 1,
dans lequel la partie de serrage supérieure (13) est conçue pour être couplée, en particulier de manière amovible, à un outil électrique (19) de telle sorte qu'à l'état couplé, la partie de serrage supérieure (13) peut être déplacée par rapport à la partie de serrage inférieure (15) au moyen de l'outil électrique (19), afin de serrer et de libérer une pièce (11), et que l'outil électrique (19) peut être guidé le long de la partie de serrage supérieure (13), afin d'usiner la pièce (11) serrée.

3. Dispositif selon la revendication 1 ou 2,
dans lequel la partie de serrage supérieure (13) est adaptée pour guider l'outil électrique (19) selon une direction de travail rectiligne (A) perpendiculaire à un axe (V) autour duquel ou le long duquel s'effectue le mouvement relatif des deux parties de serrage (13, 15).

4. Dispositif selon l'une des revendications précédentes,
dans lequel le mouvement relatif des deux parties de serrage (13, 15) est un mouvement de pivotement.

5. Dispositif selon l'une des revendications précédentes,
dans lequel la liaison mécanique (17) entre les deux parties de serrage est une liaison articulée.

6. Dispositif selon l'une des revendications précédentes,
dans lequel la partie de serrage supérieure (13) comporte, sur sa face supérieure, au moins un moyen de guidage linéaire (21) définissant une direction de travail (A) pour l'outil électrique (19), en particulier une rainure de guidage ou une barrette de guidage continue ou discontinue.

7. Dispositif selon l'une des revendications précédentes,
dans lequel la partie de serrage supérieure (13) est conçue comme un rail de guidage pour l'outil électrique (19).

8. Dispositif selon l'une des revendications précédentes,
dans lequel au moins la partie de serrage inférieure (15) présente au moins une aide au positionnement (23) pour une pièce (11) à usiner, grâce à laquelle, déjà avant d'atteindre la position de serrage, une pièce (11) à usiner peut être maintenue sur la partie de serrage inférieure (15) au moins par rapport à une direction de travail (A) de l'outil électrique (19),
de préférence, la partie de serrage supérieure (13) présente également une aide au positionnement (24) qui, au moins dans la position de serrage, coopère avec l'aide au positionnement (23) de la partie de serrage inférieure (15), afin de maintenir conjointement la pièce (11) à usiner.

9. Dispositif selon la revendication 8,
dans lequel est prévu une pluralité d'aides au positionnement (23) différentes qui peuvent être montées chacune de manière amovible sur la partie de serrage inférieure (15) et qui sont interchangeables entre elles,
en particulier, il est prévu plusieurs jeux différents d'aides au positionnement qui comprennent chacun une aide au positionnement (23) pour la partie de serrage inférieure (15) et une aide au positionnement (24), associée à celle-ci, pour la partie de serrage supérieure (13).

10. Dispositif selon l'une des revendications précédentes,
dans lequel la partie de serrage inférieure (15) présente, sur sa face inférieure, au moins une surface d'appui plane (25) ou au moins un groupe de points d'appui définissant ensemble un plan d'appui.

11. Dispositif selon l'une des revendications précédentes,
dans lequel la partie de serrage inférieure (15) est formée par un profilé extrudé ou un profilé filé, en particulier en aluminium ou en matière plastique.

12. Système portable destiné à usiner des pièces (11), comprenant un outil électrique portable (19) guidé à la main et un dispositif de serrage portable selon l'une des revendications précédentes,
dans lequel l'outil électrique (19) et la partie de serrage supérieure (13) du dispositif de serrage peuvent être couplés ou sont couplés l'un à l'autre, en particulier de manière amovible, de telle sorte qu'à l'état couplé, la partie de serrage supérieure (13) peut être déplacée par rapport à la partie de serrage inférieure (15) au moyen de l'outil électrique (19), afin de serrer et de libérer une pièce (11), et que l'outil électrique (19) peut être guidé le long de la partie de serrage supérieure (13), afin d'usiner la pièce (11) serrée.

13. Outil électrique portable (19) guidé à la main, destiné à usiner des pièces (11), par exemple scie circulaire portative destinée à raccourcir des tubes ou des profilés, comprenant un dispositif de serrage selon l'une des revendications 1 à 10,
dans lequel la partie de serrage supérieure (13) du dispositif de serrage est un rail de guidage qui est couplé de manière amovible à l'outil électrique (19).

14. Dispositif, système ou outil électrique selon l'une des revendications précédentes,
dans lequel l'outil électrique (19) est une scie circulaire portative, une meuleuse d'angle, une scie sauteuse ou une défonceuse.
